(19) Europäisches Patentamt
European Patent Office
Office européen des brevets

(11) EP 3 900 537 A1

(12) **EUROPEAN PATENT APPLICATION**
published in accordance with Art. 153(4) EPC

(43) Date of publication:
**27.10.2021 Bulletin 2021/43**

(21) Application number: **19897244.0**

(22) Date of filing: **21.11.2019**

(51) Int Cl.:
***A01N 43/90*** *(2006.01)* ***A01N 43/80*** *(2006.01)*
***A01P 13/00*** *(2006.01)*

(86) International application number:
**PCT/CN2019/119984**

(87) International publication number:
**WO 2020/119415 (18.06.2020 Gazette 2020/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.12.2018 CN 201811535534**

(71) Applicant: **Shenyang Sinochem Agrochemicals R&D Co., Ltd.**
**Tiexi District**
**Shenyang**
**Liaoning 110021 (CN)**

(72) Inventors:
- **CUI, Dongliang**
  **Shenyang, Liaoning 110021 (CN)**
- **MA, Hongjuan**
  **Shenyang, Liaoning 110021 (CN)**
- **YANG, Jichun**
  **Shenyang, Liaoning 110021 (CN)**
- **GUAN, Aiying**
  **Shenyang, Liaoning 110021 (CN)**
- **LIU, Changling**
  **Shenyang, Liaoning 110021 (CN)**
- **LUO, Yanmei**
  **Shenyang, Liaoning 110021 (CN)**
- **LU, Zhengmao**
  **Shenyang, Liaoning 110021 (CN)**

(74) Representative: **Nederlandsch Octrooibureau**
**P.O. Box 29720**
**2502 LS The Hague (NL)**

(54) **HERBICIDE COMPOSITION AND APPLICATION THEREOF**

(57) The present invention relates to a herbicidal composition and an application method thereof. The composition comprises two active components of A and B, wherein the component A is selected from a compound shown in the following general formula:

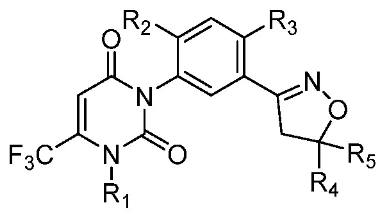

The component B is selected from one of ACCase inhibitor herbicides. The herbicidal composition of the present invention is especially suitable for controlling weeds which are tolerant or resistance to organophosphorus herbicides, especially glyphosate.

EP 3 900 537 A1

## Description

### Technical Field

The present invention belongs to the field of agricultural herbicides, and relates to a herbicidal composition and an application thereof.

### Background

Patent WO2016095768 has reported an isoxazoline-containing uracil compound shown in a general formula I:

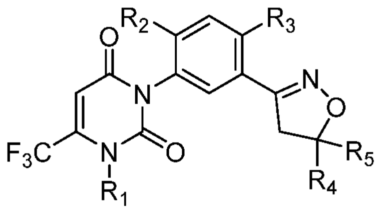

The compound in the general formula I has good herbicidal activity, can effectively control weeds of different leaf stages, such as barnyard grass, cyperus difformis, juncellus serotinus, crab grass, hispid arthraxon, piemarker, zinnia, amaranthus retroflexus, purslane, xanthium, nightshade, cassia, hibiscus trionum and glycine ussuriensis, and can obtain good weeding effect at low dose.

Diquat is a contactnon-selective herbicide and its drugs can be quickly absorbed by green plant issues and are highly destructive to the lipid synthesis of plants and the bilayer membranes of chloroplasts to stop photosynthesis and make the plants lose water rapidly, wither and die. After contact with soil, the plants quickly loss activity. The diquat is widely used for weeding control quickly in crop fields, orchards, no-til field, and before harvesting. However, the herbicide has poor conduction , can only damage the contact sites with the herbicide and cannot kill the root systems of the weeds.

### Summary

The purpose of the present invention is to provide a herbicidal composition and an application thereof.

To achieve the above purpose, the present invention adopts the following technical solution:

A herbicidal composition is provided. Active components of the herbicidal composition are composed of component A and component B; the component A is a compound shown in the following structural formula I; the component B is diquat; a weight ratio of the active component A to the active component B is 1:40 to 40:1;

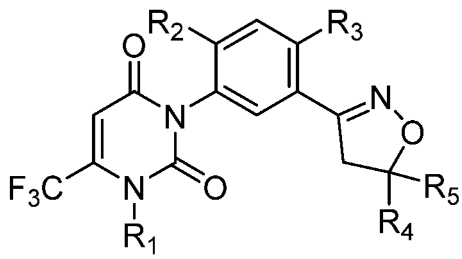

formula I

in the formula:

$R_1$ is selected from methyl;
$R_2$ and $R_3$ can be identical or different, and are respectively selected from hydrogen, fluorine or chlorine;
$R_4$ is selected from $CO_2R_6$;
$R_5$ is selected from hydrogen, methyl, ethyl, tert-butyl or trifluoromethyl;
$R_6$ is selected from hydrogen, methyl, ethyl, n-propyl, n-butyl, isopropyl, isobutyl, tert-butyl, trifluoroethyl, allyl, propargyl, methoxyethyl, ethoxyethyl, 2-tetrahydrofuran methylene or 3-tetrahydrofuran methylene.

Preferably, the weight ratio of the component A to the component B in the composition is 1:20 to 20:1; for the component A, in the formula I:

$R_1$ is selected from methyl;
$R_2$ is selected from fluorine;
$R_3$ is selected from chlorine;
$R_4$ is selected from $CO_2R_6$;
$R_5$ is selected from methyl;
$R_6$ is selected from hydrogen, methyl, ethyl, n-propyl, n-butyl, isopropyl, isobutyl, tert-butyl, trifluoroethyl, allyl, propargyl, methoxyethyl, ethoxyethyl, 2-tetrahydrofuran methylene or 3-tetrahydrofuran methylene;
the component B is diquat.

More preferably, the weight ratio of the component A to the component B in the composition is 1:10 to 10:1; for the component A, in the formula I:

$R_1$ is selected from methyl;
$R_2$ is selected from fluorine;
$R_3$ is selected from chlorine;
$R_4$ is selected from $CO_2C_2H_5$, $CO_2C_3H_7$ or $CO_2C_4H_9$;
$R_5$ is selected from methyl;
the component B is diquat.

An application of the herbicidal composition is provided. An application of the composition in management of weeds is provided.
The weeds are grass weeds, broadleaf weeds, sedge weeds, algae, ferns and woody shrubs.
A herbicide is provided; a herbicidal active component is the herbicidal composition, and the weight percentage of the herbicidal composition is 0.1-95%.
In the definitions of the compounds of the general formula I provided above, the terms used in the collection are generally defined as follows:
Halogen: fluorine, chlorine, bromine or iodine. Alkyl: linear or branched alkyl, such as methyl, ethyl, propyl, isopropyl, n-butyl or tert-butyl. Haloalkyl: linear or branched alkyl on which hydrogen atoms can be partially or fully replaced by halogen atoms, such as chloromethyl, dichloromethyl, trichloromethyl, fluoromethyl, difluoromethyl and trifluoromethyl.
Part of compounds in the general formula I can be illustrated by specific compounds listed in Table 1, but the present invention is not limited to the compounds. The compounds in the general formula can be prepared as recorded in WO2016095768. In the table, the compound $R_1$=$CH_3$, and other groups are shown in Table 1.

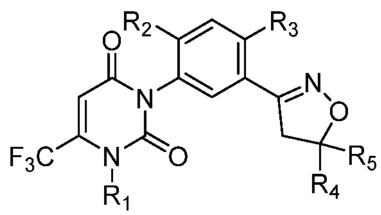

formula I

Table 1

| No. | $R_2$ | $R_3$ | $R_4$ | $R_5$ |
|---|---|---|---|---|
| A-1 | F | Cl | $CO_2H$ | $CH_3$ |
| A-2 | F | Cl | $CO_2CH_3$ | $CH_3$ |
| A-3 | F | Cl | $CO_2C_2H_5$ | $CH_3$ |
| A-4 | F | Cl | $CO_2C_3H_7$ | $CH_3$ |
| A-5 | F | Cl | $CO_2C_4H_9$ | $CH_3$ |

(continued)

| No. | $R_2$ | $R_3$ | $R_4$ | $R_5$ |
|---|---|---|---|---|
| A-6 | F | Cl | $CO_2$(*cyclo*-$C_3H_5$) | $CH_3$ |
| A-7 | F | Cl | $CO_2$(*iso*-$C_3H_7$) | $CH_3$ |
| A-8 | F | Cl | $CO_2$(*tert*-$C_4H_9$) | $CH_3$ |
| A-9 | F | Cl | $CO_2CH_2C{\equiv}CH$ | $CH_3$ |
| A-10 | F | Cl | $CO_2CH_2CH{=}CH_2$ | $CH_3$ |
| A-11 | F | Cl | $CO_2CH_2C(CH_3){=}CH_2$ | $CH_3$ |
| A-12 | F | Cl | $CO_2CH_2CH_2OC_2H_5$ | $CH_3$ |
| A-13 | F | Cl | $CO_2CH_2CH_2OCH_3$ | $CH_3$ |
| A-14 | F | Cl | $CO_2CH_2CH_2OCOCH_3$ | $CH_3$ |
| A-15 | F | Cl | $CO_2CH_2Ph$ | $CH_3$ |
| A-16 | F | Cl | $CO_2CH_2$(4-Cl-Ph) | $CH_3$ |
| A-17 | F | Cl | $CO_2CH_2$(2,6-2F-Ph) | $CH_3$ |
| A-18 | F | Cl | $CO_2CH_2$(2,6-2Cl-Ph) | $CH_3$ |
| A-19 | F | Cl | CN | $CH_3$ |
| A-20 | F | Cl | $CH_2OCOCH_3$ | $CH_3$ |
| A-21 | F | Cl | $CO_2CH_2CF_3$ | $CH_3$ |
| A-22 | F | Cl | $CO_2CH_2CH(CH_3)_2$ | $CH_3$ |
| A-23 | F | Cl | 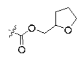 | $CH_3$ |
| A-24 | F | Cl | $CO_2CH_3$ | H |
| A-25 | F | Cl | $CO_2C_2H_5$ | H |
| A-26 | F | Cl | $CO_2C_3H_7$ | H |
| A-27 | F | Cl | $CO_2C_4H_9$ | H |
| A-28 | F | Cl | $CO_2$(*cyclo*-$C_3H_5$) | H |
| A-29 | F | Cl | $CO_2$(*iso*-$C_3H_7$) | H |
| A-30 | F | Cl | $CO_2$(*tert*-$C_4H_9$) | H |
| A-31 | F | Cl | $CO_2CH_2CH_2OC_2H_5$ | H |
| A-32 | F | Cl | $CO_2CH_2CH_2OCH_3$ | H |
| A-33 | F | Cl | $CO_2CH_2CH_2OCOCH_3$ | H |
| A-34 | F | Cl | $CO_2CH_2Ph$ | H |
| A-35 | F | Cl | $CO_2CH_2$(4-Cl-Ph) | H |
| A-36 | F | Cl | $CO_2CH_2$(2,6-2F-Ph) | H |
| A-37 | F | Cl | $CO_2CH_2$(2,6-2Cl-Ph) | H |
| A-38 | H | Cl | $CO_2H$ | $CH_3$ |
| A-39 | H | Cl | $CO_2CH_3$ | $CH_3$ |
| A-40 | H | Cl | $CO_2C_2H_5$ | $CH_3$ |
| A-41 | H | Cl | $CO_2C_3H_7$ | $CH_3$ |
| A-42 | H | Cl | $CO_2C_4H_9$ | $CH_3$ |

(continued)

| No. | $R_2$ | $R_3$ | $R_4$ | $R_5$ |
|---|---|---|---|---|
| A-43 | H | Cl | $CO_2$(*cyclo*-$C_3H_5$) | $CH_3$ |
| A-44 | H | Cl | $CO_2$(*iso*-$C_3H_7$) | $CH_3$ |
| A-45 | H | Cl | $CO_2$(*tert*-$C_4H_9$) | $CH_3$ |

The herbicidal composition of the present invention is applied to places where undesired vegetation is present or expected to be present, i.e., selectively or non-selectively used in places where undesired vegetation is present or expected to be present. Specifically, the herbicidal composition can be applied to stems and leaves of undesired vegetation, or moorburn before planting or before seedling emergence and after planting, and post-emergence treatment of tolerant crops and non-tolerant crops.

The herbicide is applied to bare places, orchards, rubber plantations, idle arable land, rubber plantations, eucalyptus forests, cedar forests, forests, firebreaks, lawns, railways, highways, airports and warehouses.

The tolerant crops and the non-tolerant crops are selected from rice, corn, bean crops, oilseed rapes, vegetables, cotton, beets, small grains, soybeans, peanuts, sugar cane, sunflower, rear plants and woody plants. The orchards comprise apple orchards, peach orchards, vineyards, pear orchards, tea orchards, mulberry orchards and citrus orchards. The undesired vegetation comprises grass weeds, broadleaf weeds, sedge weeds, algae, ferns and woody shrubs.

The present invention has the following advantages:

1. The herbicidal composition of the present invention has a very obvious synergy between the two active components, thereby reducing the dosages of the active components.
2. The herbicidal composition of the present invention jointly uses the two active components, thereby expanding the weed control spectrum, reducing the dosages and use frequency, preventing resistant weeds from developing resistance, and controlling the resistant weeds.
3. The herbicidal composition of the present invention uses the complementation of different action mechanisms and has the characteristics of contact and conduction, thereby increasing the adaptability to adverse environments such as drought and low temperature, accelerating the response speed and more weeding control thoroughly.
4. The herbicidal composition of the present invention extends the suitable application stage, further enhances the continuous inhibition and control effects on the grass weeds with larger leaf stage. and also has high control effect on some glyphosate-resistant weeds such as Conyza canadensis (L.) Cronq. , Cynodondactylon(Linn.)Pers. and Eleusineindica(L.) Gaertn..
5. The herbicide of the present invention can be used as pre-emergence and post-emergence herbicide to controll most of weeds in bare places, orchards, idle arable land, rubber plantations, eucalyptus forests, forests, firebreaks, lawns, railways, highways, airports and warehouses.

## Detailed Description

The synergy of the herbicidal composition of the present invention for the grass weeds and the broadleaf weeds can be further illustrated through the following embodiments, but the present invention is not limited to this. Active components of the herbicidal composition of the present invention are composed of component A and component B; the component A is a compound shown in formula I; and the component B is diquat. The percentages in all proportions are weight percentages, and the active components are computed by effective contents.

## Embodiment of Determination of Biological Activity

Embodiment 1 The synergistic effectsof the compound contained with component A and component B is conducted in greenhouse in the present invention, and the component A takes A-3, A-4 and A-5 compounds in the compound table 1 of the general formula I as examples.

The synergistic effects of the composition on the weeds is defined through greenhouse test.

A weed culture method is: respectively planting weed seeds of piemarker and barnyard grass quantitatively in a paper cup with a diameter of 7 cm and containing nutrient soil; after planting, covering soil, pressing and watering; and then culturing in a greenhouse. The grass weeds grow to 5-7 leaf stages; the broadleaf weeds grow to 6-8 leaf stages; pre-emergence and post-emergence treatment are conducted with three times repeats. The weeds are placed in the greenhouse after treatment when the leaf without water dried naturally in air, and cultured with normal method. According to the inhibited condition or dying condition of the weeds, after treatement 30 days, visual inspection of the

control effect is conducted (see Table 2-Table 7).

A herbicide formulation preparing method: all test samples are technical dissolved by a mixed solvent of acetone and dimethylformyl (1:2, V/V) firstly; then 1 ‰ of Tween 80 water is used to prepare mother liquor of a certain concentration; and then processing solutions of different doses are prepared according to test schemes.

The present invention adopts a Gowing method for evaluating the combined action of the proposed composition.

Theoretical Value $E_0 = X + Y - \frac{XY}{100}$

In the formula:

X- the weed control effect when the dosage of the component A of the herbicide is P;
Y- the weed control effect when the dosage of the component B of the herbicide is Q;
$E_0$ - the theoretical control effect when the dosage of the component A of the herbicide is P + the theoretical control effect when the dosage of the component B of the herbicide is Q;
E- the measured control effect after the component A of the herbicide and the component B of the herbicide are mixed in the above proportion.

When $E-E_0>10\%$, the synergy is achieved; when $E-Eo< -10\%$, antagonism is achieved; when the value of $E-E_0$ is between $\pm10\%$, the addition effect is achieved.

Table 2 Combined Action of Mixture of Components A-3 and B on Barnyard Grass and Piemarker

| Drug | Dose (ga.i./hm$^2$) | Barnyard Grass | | | Piemarker | | |
|---|---|---|---|---|---|---|---|
| | | Measured Value E | Theoretical Value $E_0$ | E- $E_0$ | Measured Value E | Theoretical Value $E_0$ | E- $E_0$ |
| Component A (List Compound A-3) | 7.5 | 20 | - | - | 15 | | |
| | 30 | 35 | - | - | 45 | | |
| | 120 | 60 | - | - | 65 | | |
| Component B (Diquat) | 7.5 | 30 | - | - | 20 | | |
| | 30 | 50 | - | - | 50 | | |
| | 120 | 65 | - | - | 60 | | |
| List Compound A-3 + Diquat | 7.5+7.5 | 60 | 44.0 | 16.0 | 45 | 32.0 | 13.0 |
| | 7.5+30 | 75 | 60.0 | 15.0 | 75 | 57.5 | 17.5 |
| | 7.5+120 | 90 | 72.0 | 18.0 | 90 | 66.0 | 24.0 |
| | 30+7.5 | 75 | 54.5 | 20.5 | 75 | 56.0 | 19.0 |
| | 30+30 | 85 | 67.5 | 17.5 | 90 | 72.5 | 17.5 |
| | 30+120 | 90 | 77.3 | 12.8 | 95 | 78.0 | 17.0 |
| | 120+7.5 | 90 | 72.0 | 18.0 | 90 | 72.0 | 18.0 |
| | 120+30 | 95 | 80.0 | 15.0 | 100 | 82.5 | 17.5 |
| | 120+120 | 100 | 86.0 | 14.0 | 100 | 86.0 | 14.0 |

Table 3 Combined Action of Mixture of Components A-4 and B on Barnyard Grass and Piemarker

| Drug | Dose (ga.i./hm$^2$) | Barnyard Grass | | | Piemarker | | |
|---|---|---|---|---|---|---|---|
| | | Measured Value E | Theoretical Value $E_0$ | E-$E_0$ | Measured Value E | Theoretical Value $E_0$ | E-$E_0$ |
| Component A (List Compound A-4) | 7.5 | 15 | - | - | 25 | - | - |
| | 30 | 40 | - | - | 40 | - | - |
| | 120 | 55 | - | - | 70 | - | - |
| Component B (Diquat) | 7.5 | 20 | - | - | 15 | - | - |
| | 30 | 45 | - | - | 55 | - | - |
| | 120 | 60 | - | - | 65 | - | - |
| List Compound A-4 + Diquat | 7.5+7.5 | 45 | 32.0 | 13.0 | 55 | 36.3 | 18.8 |
| | 7.5+30 | 70 | 53.3 | 16.8 | 80 | 66.3 | 13.8 |
| | 7.5+120 | 85 | 66.0 | 19.0 | 90 | 70.0 | 20.0 |
| | 30+7.5 | 70 | 52.0 | 18.0 | 65 | 49.0 | 16.0 |
| | 30+30 | 80 | 67.0 | 13.0 | 85 | 73.0 | 17.0 |
| | 30+120 | 98 | 76.0 | 22.0 | 98 | 76.0 | 22.0 |
| | 120+7.5 | 80 | 64.0 | 16.0 | 85 | 74.5 | 15.5 |
| | 120+30 | 90 | 75.3 | 14.8 | 100 | 86.5 | 13.5 |
| | 120+120 | 100 | 82.0 | 18.0 | 100 | 88.0 | 12.0 |

Table 4 Combined Action of Mixture of Components A-5 and B on Barnyard Grass and Piemarker

| Drug | Dose (ga.i./hm$^2$) | Barnyard Grass | | | Piemarker | | |
|---|---|---|---|---|---|---|---|
| | | Measured Value E | Theoretical Value $E_0$ | E- $E_0$ | Measured Value E | Theoretical Value $E_0$ | E- $E_0$ |
| Component A (List Compound A-5) | 7.5 | 25 | - | - | 35 | - | - |
| | 30 | 35 | - | - | 45 | - | - |
| | 120 | 50 | - | - | 60 | - | - |
| Component B (Diquat) | 7.5 | 30 | - | - | 30 | - | - |
| | 30 | 40 | - | - | 45 | - | - |
| | 120 | 55 | - | - | 55 | - | - |
| List Compound A-5 + Diquat | 7.5+7.5 | 65 | 47.5 | 17.5 | 70 | 54.5 | 15.5 |
| | 7.5+30 | 75 | 55.0 | 20.0 | 75 | 64.3 | 15.8 |
| | 7.5+120 | 80 | 66.3 | 13.8 | 85 | 70.8 | 19.3 |
| | 30+7.5 | 65 | 54.5 | 15.5 | 75 | 61.5 | 13.5 |
| | 30+30 | 85 | 61.0 | 24.0 | 90 | 69.8 | 20.3 |
| | 30+120 | 85 | 70.8 | 14.3 | 90 | 75.3 | 14.8 |
| | 120+7.5 | 90 | 65.0 | 25.0 | 90 | 72.0 | 18.0 |
| | 120+30 | 90 | 70.0 | 20.0 | 95 | 78.0 | 17.0 |
| | 120+120 | 95 | 77.5 | 17.5 | 98 | 82.0 | 16.0 |

Test results (Table 2, Table 3 and Table 4) indicate that, obvious synergies are presented on the barnyard

grass and the piemarker when the components A-3, A-4 and A-5 are respectively mixed with the component B.

**Claims**

1. A herbicidal composition, **characterized in that** active components of the herbicidal composition are composed of component A and component B; the component A is a compound shown in the following structural formula I; the component B is diquat; a weight ratio of the active component A to the active component B is 1:40 to 40:1;

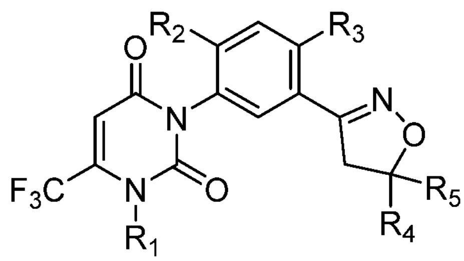

formula I

in the formula:

$R_1$ is selected from methyl;
$R_2$ and $R_3$ can be identical or different, and are respectively selected from hydrogen, fluorine or chlorine;
$R_4$ is selected from $CO_2R_6$;
$R_5$ is selected from hydrogen, methyl, ethyl, tert-butyl or trifluoromethyl;
$R_6$ is selected from hydrogen, methyl, ethyl, n-propyl, n-butyl, isopropyl, isobutyl, tert-butyl, trifluoroethyl, allyl, propargyl, methoxyethyl, ethoxyethyl, 2-tetrahydrofuran methylene or 3-tetrahydrofuran methylene.

2. The herbicidal composition according to claim 1, **characterized in that** the weight ratio of the component A to the component B in the composition is 1:20 to 20:1;
for the component A, in the formula I:

$R_1$ is selected from methyl;
$R_2$ is selected from fluorine;
$R_3$ is selected from chlorine;
$R_4$ is selected from $CO_2R_6$;
$R_5$ is selected from methyl;
$R_6$ is selected from hydrogen, methyl, ethyl, n-propyl, n-butyl, isopropyl, isobutyl, tert-butyl, trifluoroethyl, allyl, propargyl, methoxyethyl, ethoxyethyl, 2-tetrahydrofuran methylene or 3-tetrahydrofuran methylene;
the component B is diquat.

3. The herbicidal composition according to claim 2, **characterized in that** the weight ratio of the component A to the component B in the composition is 1:10 to 10:1;
for the component A, in the formula I:

$R_1$ is selected from methyl;
$R_2$ is selected from fluorine;
$R_3$ is selected from chlorine;
$R_4$ is selected from $CO_2C_2H_5$, $CO_2C_3H_7$ or $CO_2C_4H_9$;
$R_5$ is selected from methyl;
the component B is diquat.

4. An application of the herbicidal composition of claim 1, **characterized in** an application of the composition in management of weeds.

5. The application of the herbicidal composition according to claim 4, **characterized in that** the weeds are grass weeds, broadleaf weeds, sedge weeds, algae, ferns and woody shrubs.

6. A herbicide, **characterized in that** a herbicidal active component is the herbicidal composition of claim 1, and the weight percentage of the herbicidal composition is 0.1-95%.

**INTERNATIONAL SEARCH REPORT**

International application No.
**PCT/CN2019/119984**

**A. CLASSIFICATION OF SUBJECT MATTER**

A01N 43/90(2006.01)i；A01N 43/80(2006.01)i；A01P 13/00(2006.01)i

According to International Patent Classification (IPC) or to both national classification and IPC

**B. FIELDS SEARCHED**

Minimum documentation searched (classification system followed by classification symbols)

A01N; A01P

Documentation searched other than minimum documentation to the extent that such documents are included in the fields searched

Electronic data base consulted during the international search (name of data base and, where practicable, search terms used)

CNPAT, CNTXT, CNKI, WPI, WOTXT, EPTXT, USTXT, ISI, STN: 沈阳中化农药化工, 异恶唑啉, 脲吡啶, 敌草快, 除草剂, isoxazolines, pyrmidine, diquat dibromide, herbicide, RN: 85-00-7.

**C. DOCUMENTS CONSIDERED TO BE RELEVANT**

| Category* | Citation of document, with indication, where appropriate, of the relevant passages | Relevant to claim No. |
|---|---|---|
| A | CN 108207997 A (SHENYANG SINOCHEM AGRO RESEARCH & DEVELOPMENT CO., LTD.) 29 June 2018 (2018-06-29)<br>claims 1-9 | 1-6 |
| A | CN 105753853 A (SHENYANG SINOCHEM AGRO RESEARCH & DEVELOPMENT CO., LTD.) 13 July 2016 (2016-07-13)<br>claims 1-10, and description, paragraph 133 | 1-6 |
| A | CN 108570041 A (SHENYANG SINOCHEM AGRO RESEARCH & DEVELOPMENT CO., LTD.) 25 September 2018 (2018-09-25)<br>embodiments | 1-6 |
| A | WO 2016095768 A1 (SHENYANG SINOCHEM AGROCHEMICALS R&D CO., LTD.) 23 June 2016 (2016-06-23)<br>embodiments | 1-6 |
| A | CN 1061966 A (NISSAN CHEMICAL INDUSTRIES, LTD.) 17 June 1992 (1992-06-17)<br>embodiments | 1-6 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 January 2020** | **18 February 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2019/119984**

| Patent document cited in search report | | | Publication date (day/month/year) | Patent family member(s) | | | Publication date (day/month/year) |
|---|---|---|---|---|---|---|---|
| CN | 108207997 | A | 29 June 2018 | None | | | |
| CN | 105753853 | A | 13 July 2016 | WO | 2016095768 | A1 | 23 June 2016 |
| | | | | AU | 2015366689 | A2 | 22 March 2018 |
| | | | | AU | 2015366689 | A1 | 09 March 2017 |
| | | | | CN | 106536517 | A | 22 March 2017 |
| | | | | BR | 112017005410 | A2 | 12 December 2017 |
| | | | | AU | 2015366689 | B2 | 08 November 2018 |
| | | | | CA | 2958170 | A1 | 23 June 2016 |
| | | | | US | 2018230139 | A1 | 16 August 2018 |
| | | | | AR | 103048 | A1 | 12 April 2017 |
| CN | 108570041 | A | 25 September 2018 | None | | | |
| WO | 2016095768 | A1 | 23 June 2016 | AU | 2015366689 | A2 | 22 March 2018 |
| | | | | AU | 2015366689 | A1 | 09 March 2017 |
| | | | | CN | 106536517 | A | 22 March 2017 |
| | | | | CN | 105753853 | A | 13 July 2016 |
| | | | | BR | 112017005410 | A2 | 12 December 2017 |
| | | | | AU | 2015366689 | B2 | 08 November 2018 |
| | | | | CA | 2958170 | A1 | 23 June 2016 |
| | | | | US | 2018230139 | A1 | 16 August 2018 |
| | | | | AR | 103048 | A1 | 12 April 2017 |
| CN | 1061966 | A | 17 June 1992 | CN | 1028476 | C | 24 May 1995 |
| | | | | LV | 11176 | B | 20 August 1996 |
| | | | | AU | 6858991 | A | 18 June 1992 |
| | | | | LV | 11176 | A | 20 April 1996 |
| | | | | AU | 643479 | B2 | 18 November 1993 |
| | | | | HU | T56554 | A | 30 September 1991 |
| | | | | CA | 2033929 | C | 20 February 2001 |
| | | | | RU | 2040523 | C1 | 25 July 1995 |
| | | | | HU | 910073 | D0 | 28 August 1991 |
| | | | | KR | 0163592 | B1 | 01 December 1998 |
| | | | | EP | 0489480 | A1 | 10 June 1992 |
| | | | | CA | 2033929 | A1 | 06 June 1992 |
| | | | | RO | 109075 | B1 | 30 November 1994 |
| | | | | HU | 214084 | B | 29 December 1997 |
| | | | | KR | 920012047 | A | 25 July 1992 |
| | | | | RU | 2010524 | C1 | 15 April 1994 |
| | | | | BR | 9100196 | A | 22 October 1991 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016095768 A